# EUROPEAN PATENT SPECIFICATION

(11) **EP 0 465 010 B1**
(45) Date of publication and mention of the grant of the patent: **20.04.1994**
(21) Application number: 91305118.1
(22) Date of filing: 06.06.1991
(51) Int. Cl.: B29C 63/00

(54) **Splittable die**
Trennbare Form
Moule séparable

(30) Priority: 02.07.1990 GB 9014667
(43) Date of publication of application: 08.01.1992
(73) Proprietor: British Gas plc, London SW1V 3JL (GB)
(72) Inventor: Hicks, Kenneth, Gateshead NE9 7UX (GB); Maine, Leslie, Cramlington, Northumberland NE23 9TF (GB)
(74) Representative: Cummings, Robert James

(56) References cited:
- EP-A- 0 016 529
- DE-A- 475 456
- FR-A- 1 198 620
- FR-A- 1 579 210
- US-A- 3 592 519
- PATENT ABSTRACTS OF JAPAN vol. 012, no. 126 (M-687)19 April 1988

## Description

This invention relates to splittable dies according to the preamble of claim 1.

In a method of inserting a plastic pipe in an existing pipe the plastic pipe is pulled through a die and then through the existing pipe. The pulling force is removed and the plastic pipe reverts to a close fit in the existing pipe.

The presence of the die causes a restriction in the plastic pipe in the region of the die.

It is an object of the invention to provide a die which enables that restriction to be removed.

A method is described in FR-A-1198620, upon which the preamble of claim 1 is based, by which a tube of polytetra-fluoroethylene (PTFE) is heated to 315°C (600 °F) and then while the tube is hot is pulled through one or more reducing dies, each comprising a complete ring, to reduce its diameter and is subsequently cooled rapidly before it has an opportunity to relax appreciably. Then, the tube is inserted into a steel tube and the entire assembly is placed in an oven and heated to 315°C (600°F). The PTFE tube expands back to its original diameter, allowance having been made for the decrease in axial length of the PTFE tube.

This method is described in relation to quite small tubes of outside diameter, say, of 16.75 millimetres (0.670 inch).

The method described is carried out in a factory and requires the whole assembly of steel tube and PTFE liner to be placed in a furnace.

By contrast relatively large pipes having diameters of for example 100 mm (4 inches) are reduced in diameter using the die according to the present invention. Furthermore, the plastic pipe is typically of polyethylene and the pipe is typically used to provide a close-fit lining of a buried gas main.
According to the invention, a die comprises a complete ring and is used to reduce the diameter of an elongated hollow plastic member which is pulled through said die and the die is characterised in that said die is composed of brittle material and has at least one formation at which force can be applied to split the ring into separate portions.

Preferably, the complete ring is of grey cast iron.

In one form of die the formation, or each of them, is triangular in shape.

In another form of die the formation, or each of them, is U-shaped.

A saw cut preferably extends from the formation, or each of them, into the ligament of material beneath the formation.

Preferably, the die in combination with one or more cylindrical bars placed in the formation, or in each of them, is split by force applied to the bar or applied to each bar.

Embodiments of dies will now be described by way of example to illustrate the invention with reference to the accompanying drawings in which:
Figures 1 and 2 are diagrammatic front elevations of two forms of die;
Figures 3 and 4 are a front elevation, and transverse cross-section on the line IV - IV in Figure 3, of the die generally as shown in Figure 2; and
Figure 5, 6 and 7 are an end elevation; a view on the split line VI-VI; and a view on the split line showing a grey cast iron pipe respectively.

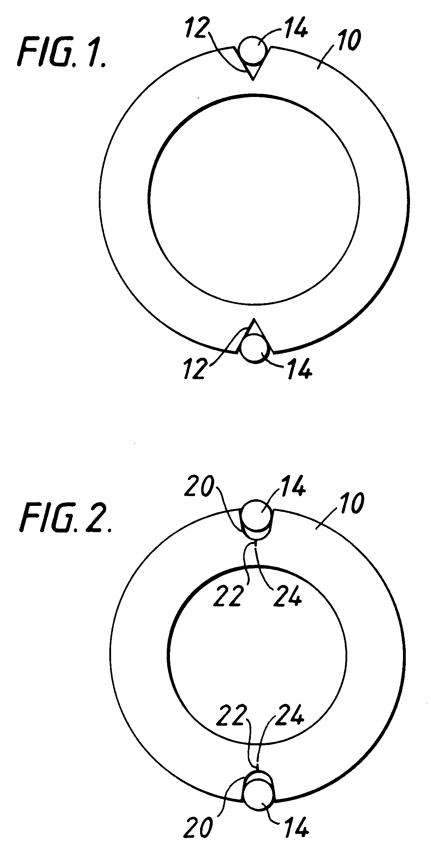

Figure 1 shows a die 10 made of cast-iron for use with polyethylene pipe used in close-fit lining of a gas pipe or main made of grey cast iron. The die is typically for use in lining a 101,6 cm (4-inch) or 152,4 cm (6-inch) main, for example. The die preferably has two diametrally-opposed triangular shaped formations 12 which are machined or cast in the material of the die 10. In order to split the die 10 a cylindrical steel bar 14 is preferably placed in each formation 12 and the two bars are squeezed together by means of a squeeze-off tool. In other dies only one formation is provided. The bars 14 are 20mm in diameter.

Figure 2 shows the die 10 of grey cast-iron as in Figure 1 but instead of triangular shaped formations the die 10 has two diametrally opposed U-shaped formations 20. A short saw cut 22 extends radially from the base of the U and acts as a stress raiser and induces bending at its tip 24. The die 10 is split as before using bars 14 squeezed together by means of a squeeze-off tool. Alternatively, only one formation is used.

As a typical example of manufacture, the die 10 as shown in Figure 2 was 50 millimetre thick; the central aperture was 120mm in diameter; the radial width of the die 10 was 40mm; the maximum width of the U-shaped formation 20 was 25mm; the maximum radial width of the ligament underlying the formation 20 was 20mm; and the saw-cut 22 was 5mm in length. The curved base of the U formation 20 has an 11mm radius.

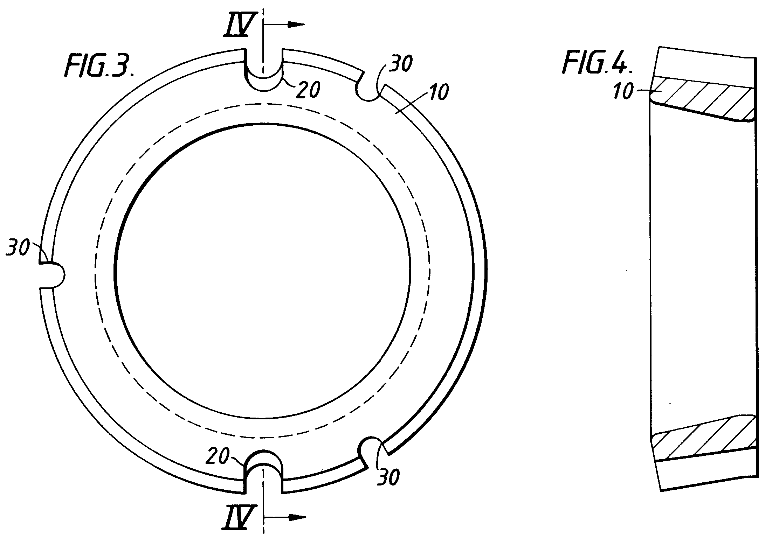

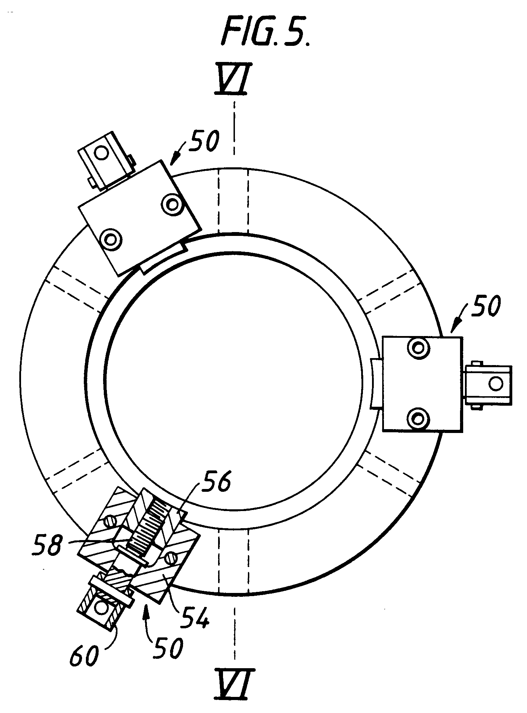

The actual shape of the die 10 as shown in Figure 2 is shown in Figures 3 and 4, for example. There are prvided three equiangularly disposed notches 30 to enable the die 10 to be secured to a support ring described with reference to Figures 5 to 7 below.

In use, polyethylene pipe is drawn through the die 10 from left to right as viewed in Figure 4.

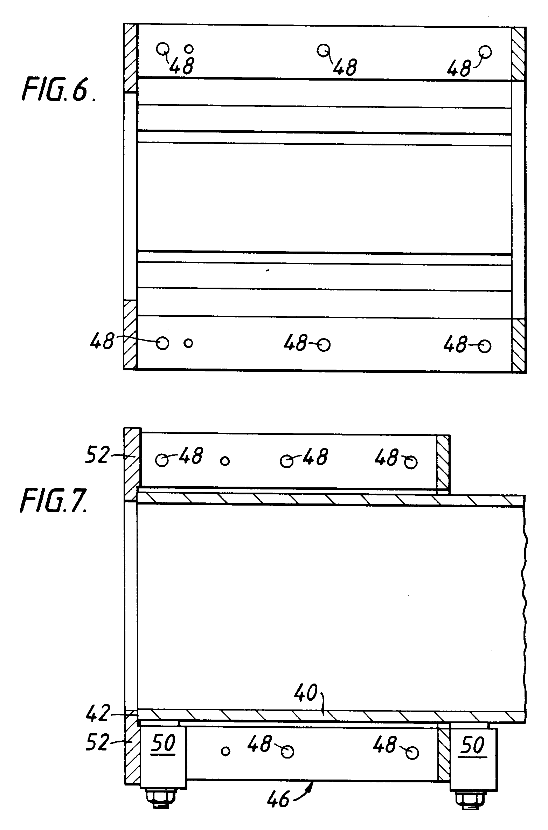

Figures 5 and 7 show a cast iron main 40 which is intended to be lined with polyethylene. The end 42 of the main 40 is exposed at an excavation and an assembly 46 is placed over the end 42. The assembly comprises two halves, each comprising two semi-circular end plates joined by four longitudinally extending rib plates.

The assembly 46 is splittable into two halves at the line VI - VI as shown in Figure 5 by dismantling bolts through the holes 48 in mating rib plates. When assembled upon the end of the main 40 the assembly 46 is complete. The clamps 50 are adjusted so that the assembly 46 (and in particular the die 10 carried by the end plate 52) is coaxial with respect to the bore of the main 40. The assembly shown in Figure 6 is used to space the die 10 further from the end of the pipe 40. When used, the assembly of Figure 6 is abutted against the plate 52 of the assembly 46 and the die 10 is mounted at the left hand end of the assembly of Figure 6.

Each clamp 50 consists of a body 54 within which there is a jaw 56 slidable upon the wall of a bore in the body 54. A screw 58 engages a screwed bore in the jaw 56 and is accessible at 60 outside the body 54.

Although the die 10 shown in Figures 3 and 4 has machined faces at the circumferential and end faces as well as the inside bore face, it is preferred to machine only the inside bore face and to leave the other faces as cast. This reduces the cost of the die to a minimum and makes the die an even more expendable item than it is when shown as in Figures 3 and 4.

In a modification (not shown) the die is of grey cast iron and is formed with two diametrally opposed, or three equidistant, or some other number of formations each adapted to receive a chisel blade. The blade is preferably advanced so that it engages one end of the formation and the chisel is given a blow by a hammer, the chisel thus being advanced parallel to the axis of the polyethylene pipe extending through the die.

The formations may again have saw cuts extending from their bases, as before, if desired. In another modification (not shown) only one formation is provided.

In a modification, the die is made from some other brittle material for example polycarbonate or a material made by powder metallurgy such as a ceramic or metal material for example. Silicon nitride or oxynitride or alumina or
aluminium nitride or oxynitride are examples of this class of material.

## Claims

1. A die (10) comprising a complete ring which is used to reduce the diameter of an elongated, hollow, plastic member which is pulled through said die (10) characterised in that said die (10) is composed of brittle material and has at least one formation (12; 20) at which force can be applied to split the ring into separate portions.

2. A die (10) according to claim 1, the complete ring being of grey cast iron.

3. A die (10) according to claim 1 or claim 2, the formation (12) or each of them (12) being triangular in shape.

4. A die (10) according to claim 1 or claim 2, the formation (20) or each of them (20) being U-shaped.

5. A die (10) according to any preceding claim, a saw cut (22) being provided extending from the formation (12; 20), or each of them (12; 20), into the ligament of material beneath the formation (12; 20).

6. A die (10) according to any preceding claim, in combination with one or more cylindrical bars (14) placed in said formation (12; 20), or in each of them (12; 20), and the die (10) is split by force applied to the bar (14) or applied to each bar (14).

7. A die (10) according to any claim of claims 1 to 5, in combination with a chisel and a hammer, the chisel being given
a blow by said hammer to advance said chisel parallel to the axis of a pipe extending through the die (10), and the die (10) being split by the blade of the chisel which is advanced so that it engages one end of the formation (12; 20) or one end of one of them (12; 20).

## Patentansprüche

1. Ziehstein (10), der einen geschlossenen Ring umfaßt, der zum Verkleinern des Durchmessers eines länglichen, hohlen Kunststoffelementes benutzt wird, das durch den Ziehstein (10) gezogen wird, dadurch gekennzeichnet, daß der Ziehstein (10) aus sprödem Material besteht und mindestens eine einzelne Ausformung (12); (20) aufweist, an der eine Kraft angesetzt werden kann, um den Ring in getrennte Abschnitte zu spalten.

2. Ziehstein (10) nach Anspruch 1, wonach der geschlossene Ring aus grauem Gußeisen besteht.

3. Ziehstein (10) nach Anspruch 1 oder 2, wonach die Ausformung (12) oder jede davon (12) eine dreieckige Form besitzt.

4. Ziehstein (10) nach Anspruch 1 oder 2, wonach die Ausformung (20) oder jede davon (20) U-förmig ist.

5. Ziehstein nach einem beliebigen vorhergehenden Anspruch, wonach ein Sägeschnitt (22) angebracht ist, der sich von der Ausformung (12; 20) oder von jeder davon (12; 20) in dem Steg des unter der Ausformung (12; 20) befindlichen Materials erstreckt.

6. Ziehstein (10) nach einem beliebigen vorhergehenden Anspruch, in Kombination mit einem oder mehreren zylindrischen Stäben, die in der Ausformung (12; 20) oder in jeder davon (12; 20) plaziert sind, und wobei der Ziehstein (10) durch eine Kraft, die auf den Stab (14) oder auf jeden Stab (14) ausgeübt wird, gespalten wird.

7. Ziehstein (10) nach einem beliebigen Anspruch 1 - 5, in Kombination mit einem Meißel und einem Hammer, wobei dem Meißel ein Schlag mit dem Hammer versetzt wird, um den Meißel parallel zur Achse eines Rohres vorzurücken, das sich durch den Ziehstein (10) erstreckt, und wobei der Ziehstein (10) durch die Schneide des Meißels gespalten wird, der so vorgerückt wird, daß er an einem Ende der Ausformung (12; 20) oder an einem Ende einer einzelnen davon (12; 20) angreift.

## Revendications

1. Filière (10) comportant un anneau complet qui est utilisé pour réduire le diamètre d'un élément allongé et creux en matière plastique qui est tiré à travers ladite filière (10), caractérisée en ce que ladite filière (10) est composée d'une matière fragile et présente au moins une conformation (12 ; 20) à laquelle une force peut être appliquée pour diviser l'anneau en parties séparées.

2. Filière (10) selon la revendication 1, dans laquelle l'anneau complet est en fonte grise.

3. Filière (10) selon la revendication 1 ou la revendication 2, dans laquelle la conformation (12) ou chacune des conformations (12) est de forme triangulaire.

4. Filière (10) selon la revendication 1 ou la revendication 2, dans laquelle la conformation (20) ou chacune des conformations (20) est de forme en U.

5. Filière (10) selon l'une quelconque des revendications précédentes, dans laquelle un trait de scie (22) est prévu, s'étendant depuis la conformation (12 ; 20), ou depuis chacune des conformations (12 ; 20), jusque dans le ligament de matière au-dessous de la conformation (12 ; 20).

6. Filière (10) selon l'une quelconque des revendications précédentes, en combinaison avec une ou plusieurs barres cylindriques (14) placées dans ladite conformation (12 ; 20), ou dans chacune des conformations (12 ; 20), la filière (10) étant divisée par une force appliquée à la barre (14) ou appliquée à chaque barre (14).

7. Filière (10) selon l'une quelconque des revendications 1 à 5, en combinaison avec un burin et un marteau, le burin recevant un coup dudit marteau pour être avancé parallèlement à l'axe d'un tuyau passant dans la filière (10), et la filière (10) étant divisée par la lame du burin qui est avancé de façon qu'elle engage une extrémité de la conformation (12 ; 20) ou une extrémité de chacune des conformations (12 ; 20).
